# EUROPEAN PATENT APPLICATION

(11) **EP 1 883 217 A1**
(43) Date of publication of application: **30.01.2008**
(21) Application number: 06425532.6
(22) Date of filing: 27.07.2006
(51) Int. Cl.: H04M 7/00, H04M 11/06

(54) **Method and system for connecting VoIP devices to telecommunication apparatuses**

(71) Applicant: Fastweb S.p.A., 20155 Milano (MI) (IT)
(72) Inventor: Guerra, Attilio, 20054 Nova Milanese MI (IT); Martini, Fabio, 20143 Milano MI (IT); Lezzi, Carlo, 20129 Milano MI (IT)
(74) Representative: Pizzoli, Antonio

(57) **Abstract**

Method for connecting a VoIP device (VD) to at least one telecommunication apparatus (TA), said VoIP device (VD) being provided at least with a digital interface (DI) for the connection to at least one digital line (DL, PN) and with an analog interface (AI) for the connection to the telecommunication apparatus (TA), wherein the telecommunication apparatus (TA), the analog interface (AI) and the digital interface (DI) of the VoIP device (VD) are connected to at least one private line or network (PN) for simultaneously transmitting analog and digital signals on this private line or network (PN). The present invention also relates to a system which can be employed for carrying out said method.

## Description

The present invention relates to a method for connecting VoIP (Voice over IP) devices to telecommunication apparatuses, for example telephones, faxes and/or modems. The present invention also relates to a system which can be employed for carrying out said method.

A VoIP device generally comprises a digital interface for the direct connection to a digital line, for example ADSL, and an analog interface for the connection to one or more analog telecommunication apparatuses. The VoIP device can further comprise one or more network interfaces for connecting network devices, for example computers or video decoders, to said digital line.

For carrying out said direct connection between the digital line and the VoIP device, the digital line must be disconnected from telephone sockets which are generally connected in series or in parallel to each other in a private telephone network installed in the premises of a user for using traditional telecommunication apparatuses. Said disconnection can however be carried out only by specialized personnel and often it is not allowed if the digital line and the telephone sockets are controlled by third parties, for example the telephone provider which previously installed said line. Furthermore, the user often is not able and/or authorized to carry out the connections between the analog interface of the VoIP device and his private network or between the digital interface of the VoIP device and the digital line.

It is therefore an object of the present invention to provide a connection method and system which are free from said disadvantages. Said object is achieved with a method and a system, the main features of which are disclosed in claims 1 and 9, respectively, while other features are disclosed in the remaining claims.

Thanks to their particular decouplers, the method and the system according to the present invention allow to keep unmodified the private network of a user and to transmit in the same network simultaneously both the digital signals between the digital line and the VoIP device and the analog signals between the VoIP device and the telecommunication apparatuses, without mutual interferences between these signals. The decouplers are therefore provided with RJ11 interfaces which simplify the connection with the telephone sockets installed in the premises of the user, so that the latter can easily carry out the connections by himself, without any specialized personnel and without tampering with his private network.

Furthermore, with the known method the VoIP device must be necessarily connected upstream of the private network of the user, thereby limiting the installation freedom of the VoIP device, while the method and the system according to the present invention allow to advantageously connect the VoIP device to any telephone socket of the user's private network.

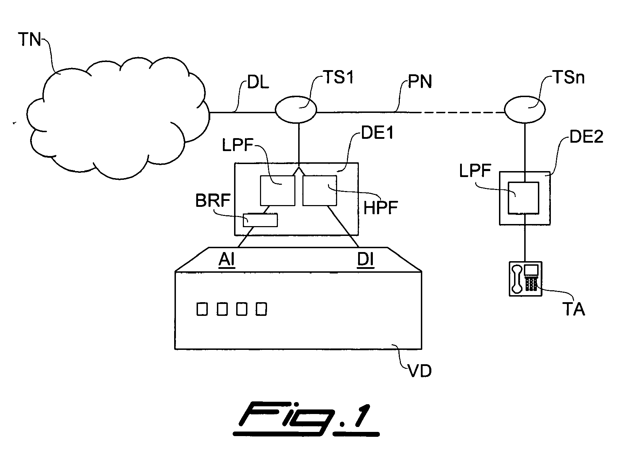

Further advantages and features of the method and the system according to the present invention will become clear to those skilled in the art from the following detailed and non-limiting description of an embodiment thereof with reference to the attached drawings wherein figure 1 shows a scheme of the system according to the present invention.

Referring to said figure, it is seen that a digital line DL, in particular an ADSL line, is connected in a known way to a telecommunication network TN and to a private line or network PN comprising a plurality of telephone sockets TS1...TSn, for example three-pole, RJ11 or RJ45 sockets, which are connected to each other and are installed in one or more premises of a user.

The system according to the present invention comprises at least one first decoupler DE1 suitable for being connected to a first telephone socket TS1 of the private line or network PN, as well as to an analog interface AI and to a digital interface DI of a VoIP device VD. The first decoupler DE1 comprises a low-pass filter LPF suitable for receiving, filtering and transmitting low-frequency analog signals, with frequencies lower than 32 kHz, in particular lower than 16 kHz, between the analog interface AI of the VoIP device VD and the first telephone socket TS1. The first decoupler DE1 further comprises a band-reject filter BRF connected in series to the low-pass filter LPF for rejecting a band of frequencies around 25 Hz and the relevant harmonics, so as to cancel the noises caused by the call signal or "ring" which is emitted by the VoIP device VD. The band-reject filter BRF is preferably activated only when said call signal is transmitted. The first decoupler DE1 also comprises a line which is suitable to connect the first telephone socket TS1 to the digital interface DI of the VoIP device VD and can be connected in series to a high-pass filter HPF suitable for receiving, filtering and transmitting high frequency signals, in particular ADSL digital signals.

The systems further comprises at least one second decoupler DE2 suitable for being connected to at least one telecommunication apparatus TA, for example a telephone, a fax or a modem, and to the private line or network PN through a second telephone socket TSn. The second decoupler DE2 comprises a low-pass filter LPF suitable for receiving, filtering and transmitting low-frequency analog signals, with frequencies lower than 32 kHz, in particular lower than 16 kHz, between the telecommunication apparatus TA and the second telephone socket TSn.

The first decoupler DE1 can be partially or completely integrated into the VoIP device VD, so as the second decoupler DE2 can be partially or completely integrated into the telecommunication apparatus TA. In particular, one or both decouplers DE1 and DE2 are provided with RJ11 interfaces for the connection to the telephone sockets TS1...TSn, to the VoIP device VD and/or to the telecommunication apparatus TA, with adapters, if necessary.

Possible modifications and/or additions may be made by those skilled in the art to the hereinabove disclosed and illustrated embodiment of the invention while remaining within the scope of the following claims.

## Claims

1. Method for connecting a VoIP device (VD) to at least one telecommunication apparatus (TA), said VoIP device (VD) being provided at least with one digital interface (DI) for the connection to at least one digital line (DL, PN) and with an analog interface (AI) for the connection to the telecommunication apparatus (TA), **characterized in that** the telecommunication apparatus (TA), the analog interface (AI) and the digital interface (DI) of the VoIP device (VD) are connected to at least one private line or network (PN) for simultaneously transmitting analog and digital signals on this private line or network (PN).

2. Method according to the previous claim, **characterized in that** the telecommunication apparatus (TA), the analog interface (AI) and the digital interface (DI) of the VoIP device (VD) are connected to said private line or network (PN) through means (DE1, DE2) suitable for receiving, filtering and transmitting low-frequency analog signals.

3. Method according to the previous claim, **characterized in that** said means (DE1, DE2) suitable for receiving, filtering and transmitting analog signals comprise at least one decoupler (DE1, DE2) provided with a low-pass filter (LPF).

4. Method according to the previous claim, **characterized in that** said low-pass filter (LPF) is suitable for transmitting analog signals with frequencies lower than 32 kHz, in particular lower than 16 kHz.

5. Method according to claim 3 or 4, **characterized in that** said decoupler (DE1, DE2) is connected to the private line or network (PN) through one or more telephone sockets (TS1, TSn) connected to each other.

6. Method according to the previous claim, **characterized in that** said telephone sockets (TS 1, TSn) are three-pole, RJ11 or RJ45 sockets.

7. Method according to one of the previous claims, **characterized in that** said private line or network (PN) is connected to a digital line (DL) of a telecommunication network (TN).

8. Method according to the previous claim, **characterized in that** said digital line (DL) is an ADSL line.

9. System for connecting a VoIP device (VD) to at least one telecommunication apparatus (TA), said VoIP device (VD) being provided at least with a digital interface (DI) for the connection to at least one digital line (DL) and with an analog interface (AI) for the connection to the telecommunication apparatus (TA), **characterized by** comprising a first decoupler (DE1) suitable for being connected to a private line or network (PN), to the analog interface (AI) and to the digital interface (DI) of the VoIP device (VD) for simultaneously transmitting analog and digital signals on this private line or network (PN).

10. System according to the previous claim, **characterized in that** said first decoupler (DE1) comprises a line suitable for connecting the private line or network (PN) to the digital interface (DI) of the VoIP device (VD).

11. System according to claim 9 or 10, **characterized in that** said first decoupler (DE1) comprises a low-pass filter (LPF) suitable for receiving, filtering and transmitting low-frequency analog signals between the analog interface (AI) of the VoIP device (VD) and the private line or network (PN).

12. System according to one of claims 9 to 11, **characterized by** comprising at least one second decoupler (DE2) suitable for being connected to the telecommunication apparatus (TA) and to the private line or network (PN).

13. System according to the previous claim, **characterized in that** said second decoupler (DE2) comprises a low-pass filter (LPF) suitable for receiving, filtering and transmitting low-frequency analog signals between the telecommunication apparatus (TA) and the private line or network (PN).

14. System according to one of claims 11 to 13, **characterized in that** said low-pass filter (LPF) is suitable for transmitting analog signals with frequencies lower than 32 kHz, in particular lower than 16 kHz.

15. System according to one of claims 9 to 14, **characterized in that** the first decoupler (DE1) comprises a band-reject filter (BRF) connected in series to the low-pass filter (LPF) for rejecting a band of frequencies around 25 Hz and the relevant harmonics.

16. System according to one of claims 9 to 15, **characterized in that** the first decoupler (DE1) comprises a high-pass filter (HPF) suitable for receiving, filtering and transmitting high frequency signals, in particular ADSL digital signals, between the private line or network (PN) and the digital interface (DI) of the VoIP device (VD).

17. System according to one of claims 9 to 16, **characterized in that** the first decoupler (DE1) is partially or completely integrated into the VoIP device (VD).

18. System according to one of claims 9 to 17, **characterized in that** the second decoupler (DE2) is partially or completely integrated into the telecommunication apparatus (TA).

19. System according to one of claims 9 to 18, **characterized in that** the first decoupler (DE1) and/or the second decoupler (DE2) are provided with RJ11 interfaces for the connection to telephone sockets (TS1, TSn), to the VoIP device (VD) and/or to the telecommunication apparatus (TA).

## Amended claims

### Amended claims in accordance with Rule 137(2) EPC.

**1.** Connection system for VoIP devices (VD) and other telecommunication apparatuses (TA), which comprises a first decoupler (DE1) provided with interfaces for the connection to a private line or network (PN) and to a VoIP device (VD) for simultaneously transmitting low-frequency analog signals and high-frequency digital signals on this private line or network (PN), wherein said first decoupler (DE1) comprises a low-pass filter (LPF) suitable for receiving, filtering and transmitting said analog signals, **characterized in that** a band-reject filter (BRF) is connected in series to the low-pass filter (LPF) for rejecting from said analog signals a band of frequencies and the relevant harmonics.

**2.** System according to the previous claim, **characterized in that** the band-reject filter (BRF) rejects a band of frequencies around 25 Hz and the relevant harmonics.

**3.** System according to one of the previous claims, **characterized in that** the first decoupler (DE1) activates the band-reject filter (BRF) only when said analog signals include a call or "ring" signal.

**4.** System according to one of the previous claims, **characterized in that** the first decoupler (DE1) comprises a high-pass filter (HPF) suitable for receiving, filtering and transmitting said digital signals.

**5.** System according to one of the previous claims, **characterized by** comprising at least one second decoupler (DE2) suitable for being connected to a telecommunication apparatus (TA) and to the private line or network (PN).

**6.** System according to the previous claim, **characterized in that** said second decoupler (DE2) comprises a low-pass filter (LPF) suitable for receiving, filtering and transmitting low-frequency analog signals between the telecommunication apparatus (TA) and the private line or network (PN).

**7.** System according to one of the previous claims, **characterized in that** said low-pass filter (LPF) is suitable for transmitting analog signals with frequencies lower than 32 kHz, in particular lower than 16 kHz.

**8.** System according to one of the previous claims, **characterized in that** the first decoupler (DE1) is partially or completely integrated into the VoIP device (VD).

**9.** System according to one of claims 5 to 8, **characterized in that** the second decoupler (DE2) is partially or completely integrated into the telecommunication apparatus (TA).

**10.** System according to one of the previous claims, **characterized in that** the first decoupler (DE1) and/or the second decoupler (DE2) are provided with RJ11 interfaces for the connection to telephone sockets (TS1, TSn), to the VoIP device (VD) and/or to the telecommunication apparatus (TA).
